Europäisches Patentamt

European Patent Office

Office européen des brevets

(11) Publication number: **0 218 198 B1**

# EUROPEAN PATENT SPECIFICATION

(45) Date of publication of patent specification: **29.07.92**  (51) Int. Cl.⁵: **B23P 19/00**

(21) Application number: **86113566.3**

(22) Date of filing: **02.10.86**

(54) **Gripper assembly.**

(30) Priority: **07.10.85 US 785292**

(43) Date of publication of application:
**15.04.87 Bulletin 87/16**

(45) Publication of the grant of the patent:
**29.07.92 Bulletin 92/31**

(84) Designated Contracting States:
**BE CH ES FR GB IT LI SE**

(56) References cited:
**CA-A- 658 351       DE-A- 2 845 094
FR-A- 1 524 356     FR-A- 1 578 126
FR-A- 2 187 499     SU-A- 1 178 525
US-A- 3 542 354**

(73) Proprietor: **WESTINGHOUSE ELECTRIC COR-
PORATION
Westinghouse Building Gateway Center
Pittsburgh Pennsylvania 15222(US)**

(72) Inventor: **Arzenti, Thomas Enrico
4515 Woodhill Drive
Munhall Pennsylvania 15120(US)**
Inventor: **Pirl, William E.
100 Stella Drive
Trafford Pennsylvania 15085(US)**

(74) Representative: **Casalonga, Axel et al
BUREAU D.A. CASALONGA - JOSSE Moras-
sistrasse 8
W-8000 München 5(DE)**

## Description

This invention generally relates to sleeving of corroded or damaged tubes of steam generators in nuclear reactors. More particularly the invention relates to a gripper assembly to facilitate sleeving of tubes in nuclear steam generators.

EPC Application EP-A-0139490 for Sleeving of Tubes of Steam Generator, assigned to Westinghouse Electric Corporation is typically of prior art. Several known pieces of art deal with the sleeving of corroded or damaged tubes of steam generators of nuclear reactors. The tubes are typically U-shaped and are sealed in a tube sheet. A channel head extends from the periphery of the tube sheet and the damaged tubes are accessible from within the channel head which may be entered through a manway. When a reactor plant is in operation, the channel head conducts the coolant. The environment within the channel head is radioactive, and, access to the damaged cubes is available only through this radioactive environment. Each damaged tube is sleeved by inserting a sleeving assembly including a sleeve blank mounted on a mandrel into the damaged tube. After the sleeve blank is inserted in the tube the mandrel must be removed. The mandrel varies widely in cross-sectional diameter and in surface contour along its length.

One piece of prior art discloses a tool and a method for carrying out the sleeving by remote control, thus minimizing the exposure of personnel to radioactivity. This tool includes gripper assemblies for holding and advancing the sleeving assembly when the sleeve is being inserted and for holding and retracting the mandrel after the sleeve blank is fully inserted.

French Patents FR-A-1 524 356 defining the closest prior art, and FR-A-2 187 499 disclose gripping apparatus having a flexible member responding to fluid pressure to grip a workpiece.

In the use of the known prior art arrangements, it is indispensable that the sleeving assembly, and particularly the sleeve blank, be precisely centered coaxially with the tube being sleeved. It is also necessary that the gripper assemblies which deliver the sleeve blank into the tube be capable of exerting the necessary force at the joint between the sleeve blank and the tube to effect the delivery. In other words, the gripper assembly which advances the sleeve blank into the tube must grasp the sleeve blank so firmly that the full advancing force initially exerted on the gripper assembly and through on the sleeve blank is transferred to the sleeve blank as the force which advances it into the tube. The advancing force should not be dissipated in part in sliding the gripper along the sleeve blank. The diameter of the sleeve blanks which are in use vary over a wide range. The gripper assembly should be compatible with sleeves of different diameters within this range. The gripper assembly should have a gripping mechanism which conforms to the surface of an elongated object whose cross-sectional dimension varies from point to point along its length over a wide range.

It is an object of this invention to provide gripping objects over a wide range of surface contours or cross-sectional dimensions, which shall have a gripping member capable of conforming to the surface of an object having an irregular surface, and which shall operate rapidly to engage or disengage the surface.

The invention in its broad form resides in a gripper assembly for firmly and releasably engaging and holding an object, said assembly including a retainer having an inner wall and an opening therein bounded by the inner wall of the retainer; a flexible annular member; cooperative means on said member and said retainer for mounting said flexible annular member along the inner wall of said retainer; an annular fluid tight assembly including the region between said retainer and said flexible member; means, connected to said retainer, for injecting a pressurized fluid into said fluid tight region between said retainer and flexible member to extend said flexible member to engage and grip said object under the pressure of said fluid; and a cage mounted within the opening in the retainer, said flexible member being interposed between said cage and the internal retainer wall, the object being disposed within the cage, and the cage having windows through which portions of the flexible member are projected through the windows by the fluid to engage the object at predetermined gripping locations.

According to the present invention as claimed said retainer includes a central groove encircling the flexible member connected to the fluid-injecting means for transmitting the fluid to the region between the inner wall of the retainer and the flexible member, and the cage includes rods extending axially of the opening and three rings joining the rods at their ends and in the center, the rods and rings definning two sets of windows through which the parts of the flexible member are extended to engage and to align the object.

In a preferred embodiment of the invention as described herein, there is provided a gripper assembly including a retainer or housing of a metal such as aluminum. A gripper member or bladder of pliable resilient thermoelastometer material extends over the internal surface of the retainer. This bladder is sealed pressure tight at its ends to the retainer defining a pressure-tight region between the retainer and the bladder. The retainer has a port through which a fluid is injected into this region causing the bladder to exert pressure on an object to be gripped and held or advanced. For centering purposes a cage is provided within the bladder.

Specifically the retainer has a circularly cylindrical internal surface and the bladder is a hollow circularly cylinder coaxial with the internal surface. The cage is an open work, typically composed of hardened stainless steel. The cage is formed of rods joined at the ends and in the center by rings. The rods may be regarded as elements of a circular cylinder whose generatrix is parallel to the rings. The cage is coaxial with the bladder and the internal surface of the retainer.

In use of this gripper assembly for sleeving, the cage serves to center the sleeve with respect to the tube being sleeved. The sleeve blank is composed of INCONEL (trademark) alloy and the bladder should be composed of a material having a high coefficient of friction on INCONEL alloy. When fluid is injected into the region between the bladder and the internal surface of the retainer, the bladder extends under pressure through windows in the cage to engage the object being gripped. The frictional force exerted by the bladder on the object is high and as the gripper assembly is moved to advance the object, the assembly does not slip relative to the object. The gripping bladder is pliable and it is capable of being extended substantially under the pressure of the fluid. By applying appropriate pressure, the bladder can be extended to grip objects over a wide range of cross-sectional dimensions. Experience with a gripper assembly according to this invention which has been used has revealed that the bladder can grip firmly a sleeve blank having a diameter approaching one inch and can also be extended to grip a cylindrical object having the diameter of a relatively thin pencil having a diameter of 6,36 mm Because the bladder is pliable, it also conforms under pressure to objects whose external diameters vary widely from point to point along their length.

In practice, the gripper according to this invention is repeatedly, through numerous cycles, pressurized and relaxed. The gripper material must then be such that the gripper retains its elasticity and pliability throughout the repeated cycling and operates rapidly responsive to the commands to be pressurized and relaxed. Typically, the material of the gripper or gripping bladder according to this invention is composed of a PELETHANE (trademark) compound which has a high coefficient of friction on INCONEL alloy. Such material may be bought from Upjohn Co. of La Porte, Texas. The material processed from Upjohn is injection-molded to form the gripper.

For a better understanding of this invention, reference is made to the following description, given by way of example and taken in conjunction with the accompanying drawings in which:

Figure 1 is a view, in longitudinal section with the cage shown in side elevation, of a gripper assembly according to an embodiment of this invention;

Figure 2 is a view in transverse section taken along line II-II of Figure 1 with the bladder shown in the retracted or relaxed state;

Figure 3 is a view in transverse section similar to Figure 2 but showing the bladder extended and in engagement with an object;

Figure 4 is a view in side elevation of the cage included in the gripper assembly shown in Figures 1, 2, 3;

Figure 5 is a graph showing the grip force exerted by the bladder on an object as a function of the pressure applied to the bladder;

Figure 6 is a plan view of a modification of this invention;

Figure 7 is a view in section taken along line VII-VII of Figure 6;

Figure 8 is a view in side elevation of the block from which a retainer section is formed;

Figure 9 is a view in end elevation taken in the direction IX of Figure 8;

Figure 10 is a view in side elevation of the block from which the retainer section abutting the section shown in Figures 8 and 9 is formed; and

Figure 11 is a view in end elevation taken in the direction XI of Figure 10.

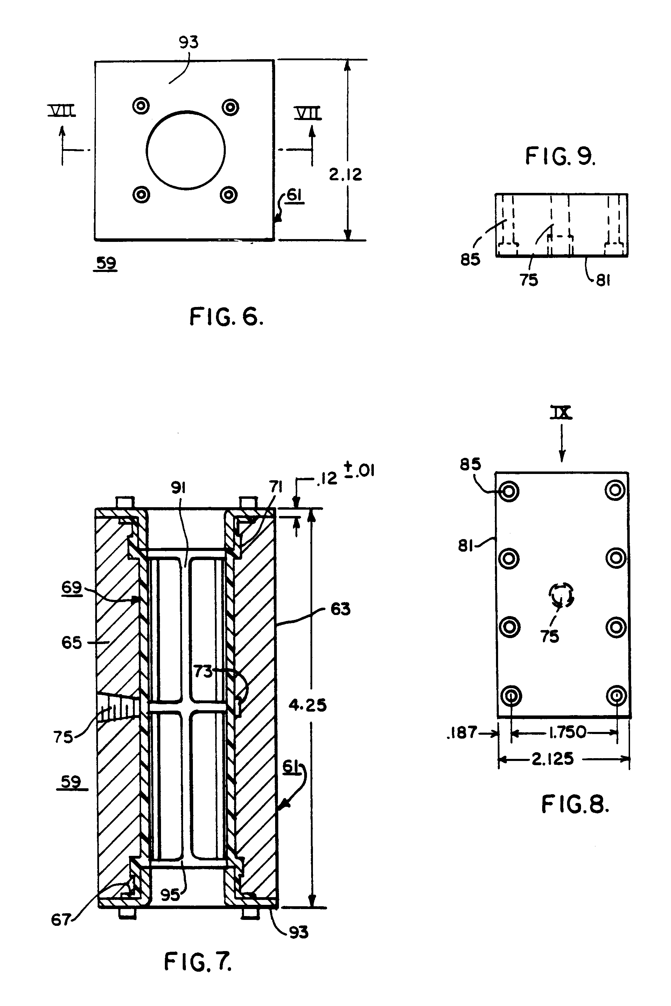

The dimensions shown in Figures 6, 7, 8 and 9 and other dimensions presented herein are included for the purpose of aiding those skilled in the art in practicing this invention and not with any intention of any way limiting this invention.

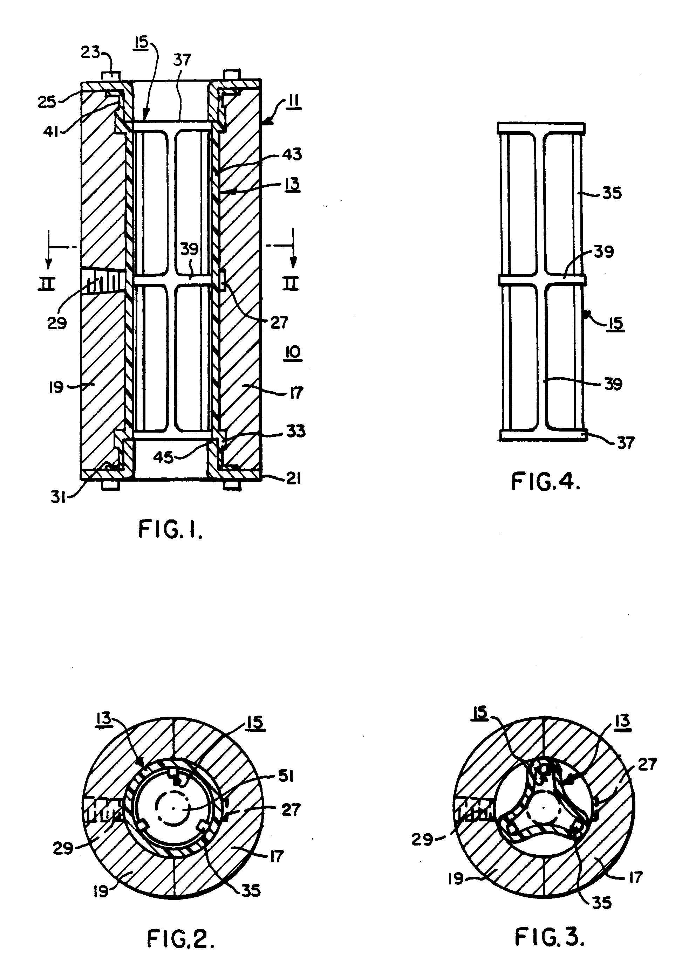

The gripper assembly 10 shown in Figures 1-4, includes a retainer or housing 11, a bladder 13 and a cage 15. The retainer 11 is composed of abutting retainer sections 17 and 19 and end caps 21. The caps 21 are of angular transverse cross-section. The retainer sections are secured together to form the retainer or housing 11 by bolts 23 through the sides of the caps 21 which engage the end surfaces of the sections 17 and 19. As shown the retainer 11 is a hollow circular cylinder having an internal circularly cylindrical wall. While the circularly cylindrical form has unique advantages in the practice of this invention, other forms or shapes both internally and externally are within the scope or equivalence of this invention. Each retainer section 17 and 19 has slots in its end surfaces 25. The slots in each section are located and dimensioned so that when the sections 17 and 19 are abutted, the slots at each surface 25 are coextensive to form a circular annular slot. The retainer sections 17 and 19 also have grooves near the upper and lower ends and a groove 27 in the center. These grooves are also so dimensioned and located in each section that with the sections abutted, they form circularly annular grooves in the retainer 11. The retainer 19 has a threaded port 29 to receive a connector (not shown) for supplying a fluid; typically compressed air. The port 29 is in fluid-transfer communication with the groove 27. The retainer sections 17 and 19 are composed of aluminum. Steel inserts (not shown) are provided in the surfaces 25 for threading the bolts 23.

The bladder 13 is a circularly cylindrical hollow member of a pliable resilient thermoelastometer. The thickness of the bladder 13 is small, typically about 1,27 mm to 1,52 mm Rings 31 extend integrally from the ends of the bladder. The rings 31 are dimensioned to seat in the annular slots in the top and bottom of the retainer or housing as shown in Figure 1. Near its ends the bladder has external annular projections 33. The projections 33 are located and dimensioned to seat in the annular grooves extending near the ends of the retainer 11 as shown in Figure 1.

The cage 15 is typically an integral structure including a plurality of rods 35 joined by end rings 37 and a ring 39 in the center. As shown in the drawings, there are three rods 35 uniformly spaced around the rings 37-39 at 120°. The rings and rods may be regarded as forming a skeleton of a circular cylinder defined by a generatrix parallel to the rods moving over the circle. The cage 15 is composed of hardened stainless steel.

In making the gripper assembly 10, blanks for the retainer sections 17 and 19 are formed from blocks. The blanks are abutted and secured together in a jig or are joined by bolts (not shown) inserted in one section and threaded into the abutting sections. The block assembly is then machined to form a structure whose outer surface is circularly cylindrical and whose inner surface is also circularly cylindrical but with the slots and grooves near the end surfaces and the groove 27 in the center. The port 29 is machined in retainer section 19 in communication with groove 27. The sections 17 and 19 are then separated and the bladder 13 is mounted on the inner walls of the retainers 17 and 19. The rings 21 are seated in the slots in the ends and the projections 33 are seated in the grooves near each end. The surfaces of the rings 31 which seat in the slots and the surfaces which seat in the grooves and the connecting surfaces are coated with a sealing material. The sections 17 and 19 containing the bladder 13 are abutted. The cage 15 is inserted centrally with respect to, and coaxially with, the retainer assembly. Each ring 31 extends from a short annulus 41 (Figure 1) which in turn extends from a projection 33. Each projection is laterally displaced from the body 43 of the bladder 13 and extends partly above the bladder so that there is a shoulder 45 at the end of the body 43. The cage is mounted with the ends of its rings 37 flush with the shoulder 45. The caps 21 are next mounted on the ends of the assembly with the surfaces of the side which engages the end surfaces of the retainer extending over the rings 31 and the ends of the other sides seated firmly on the shoulders 45 and the adjacent portion of the rings 37. The caps are then tightly bolted to the ends of the retainer 11 so that the rings 31 and projections 33 form pressure-tight seals between the slots and the caps 21.

In the use of the gripper assembly 10, an object 51 (Figures 2, 3) to be gripped is centered in the cage 15. A fluid is then injected into the part 29 and flows through the groove 27 into the region between the body 43 of the bladder 13 and the inner surface of the retainer. The body 43 of the bladder 13 is deflected as shown in Figure 3 firmly engaging the body 51 to be gripped. The cage 15 determines the pressurized contour of the body 43. Windows are defined between the ring 39, the rings 37 and the rods 35 of the cage 15 and the gripper body 43 expands through these windows when pressurized. The cage shown in the drawing causes the pressurized body contour to consist of two sets of gripping surfaces, one in each side of the central ring 39, the surfaces being spaced by 120° so that the object 51 is uniformly gripped. The engagement of the object 51 in two regions helps align the object. Since the pressure is the same throughout the body 43 and the object 51 is gripped symmetrically with respect to its axis, the gripping forces exerted by the three gripping surfaces are equal and opposite and the object 51 is not displaced in one direction or the other. The cage configuration provides not only gripping forces, but also centering action and lateral stability for the side-to-side loading of an externally gripped object particularly of tubular shape. Because of the pliability and elasticity of the bladder material, the bladder conforms to a non-homogeneous object 51. The projections 31 assure that when the fluid is exhausted the body 43 will, by reason of its resilience, be restored to its original unstressed position.

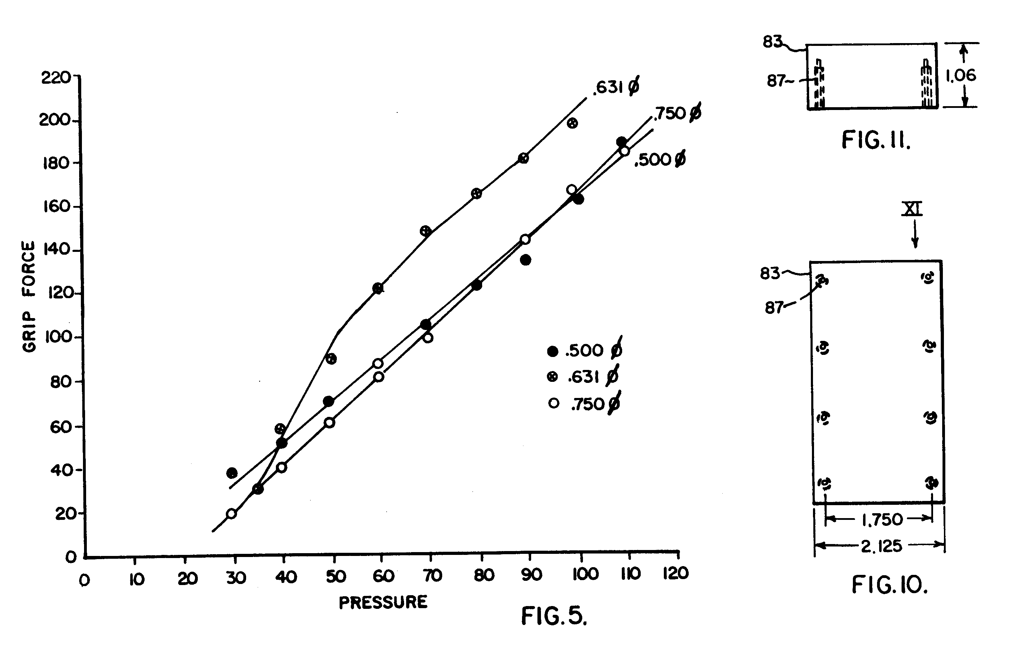

Figure 5 shows the relationship between the force exerted by the bladder 13 on circularly cylindrical objects 51 of different diameter of specimens of INCONEL alloy and the pressure impressed on the bladder. Force in pounds is plotted vertically and pressure in pounds per square inch gage, i.e., above atmospheric pressure horizontally. Curves are plotted for bodies of 12,7 mm diameter, 16 mm diameter and 19mm diameter.

In the gripper 59 shown in Figures 6-11, the retainer or housing 61 (Figures 6, 7) has an external surface of square transverse cross section. The retainer 61 is formed of retainer sections 63 and 65 whose external transverse cross-sections have the form of three sides of a rectangle. Internally the retainer sections 63, 65 are of semicircular transverse cross-section and have the slots in which rings 67 (Figure 7) of the pliable resilient member, bladder 69 are seated, and the grooves in which the projections 71 of the member 69 are seated and the groove 73. The groove 73, which is in communication with the port 75, is in section 63. In Figure 7 the port is shown displaced by 90°.

The retainer section 63 is formed from a block 81 (Figures 8, 9) and the retainer section 65 is formed from block 83 (Figures 10, 11). Blocks 81 and 83 are typically composed of aluminum. The block 81 has bolt holes 85; the block 83 has threaded inserts 87 into which the bolts (not shown) which are inserted in bolt holes 85 are threaded. In making the retainer 59 the blocks 81 and 83 are abutted and bolted together. The circular surfaces with its slots and grooves are machined in this assembly to form the retainer sections 63 and 65. The bolts are then removed and the bladder 69 is positioned in each section. The surfaces of the rings 67 and projections 71 which are to seat in the slots and grooves and the surfaces which join the rings and grooves which are to engage the corresponding surfaces of the retainer sections, are coated with a sealing compound such as "PERMATEX". The sections 63 and 65 are then bolted together. The cage 91 is then inserted and properly positioned and centered in this last-formed latter assembly and the caps 93 are bolted to the ends of the retainer 61. The inwardly extending rim of each cap engages the corresponding ring 95 of the cage.

While preferred embodiments of this invention have been disclosed herein, many modifications thereof are feasible. For example, while the gripper assembly in accordance with this invention is uniquely suitable for gripping the external surface of an object, it may be applied to grip the inner surface of an object. The application of the principle of this invention to the gripping of the inner surface of an object is within the scope or equivalents of this invention. This invention is not to be restricted except insofar as is necessitated by the spirit of the prior art.

**Claims**

1. A gripper assembly (10) for firmly and releasably engaging and holding an object within said assembly (10) said assembly (10) including a retainer (11) having an inner wall and an opening therein bounded by the inner wall of the retainer (11), a flexible annular member (13), cooperative means on said member (13) and said retainer (11) for mounting said flexible annular member (13) along the inner wall of said retainer (11); an annular fluid tight assembly including the region between said retainer (11) and said flexible member (13); means (29) connected to said retainer (11), for injecting a pressurized fluid into said fluid tight region between said retainer (11) and flexible member (13) to extend said flexible member (13) to engage and grip said object (51) under the pressure of said fluid; and a cage (15) mounted within the opening in the retainer (11), said flexible member (13) being interposed between said cage (15) and the internal retainer wall, the object (51) being disposed within the cage (15) and the cage (15) having windows through which portions of the flexible member (13) are projected through the windows by the fluid to engage the object (51) at predetermined gripping locations, characterized in that said retainer (11) includes a central groove (27) encircling the flexible member (13) and connected to the fluid-injecting means (29) for transmitting the fluid to the region between the inner wall of the retainer (11) and the flexible member (13); and the cage (15) includes rods (35) extending axially of the opening and three rings (37,39) joining the rods (35) at their ends and in the center, the rods (35) and rings (37, 39) defininng two sets of windows through which the parts of the flexible member (13) are extended to engage and to align the object (51).

2. The gripper assembly (10) of claim 1 characterized in the thickness of the flexible member (13) is relatively small so that said flexible member (13) when engaging an object (51) of irregular surface contour, conforms itself to the surface of said object (51).

3. The gripper assembly (10) of claim 1 wherein the retainer (11) includes a groove (27) encircling the flexible member (13) connected to the fluid-injecting means (29) for transmitting the fluid to the region between the inner wall of the retainer (11) and the flexible member (13).

4. The gripper assembly (10) of claim 1, characterized in that the retainer (11) is formed by a plurality of abutting retainer sections (17, 19), the inner surfaces of said sections (17, 19) being co-extensive to form an inner wall defining the opening.

5. The gripper assembly (10) of claim 1, characterized in that the retainer (11) and the flexible member (13) are generally cylindrical, the retainer (11) having circumferential slots in its ends and the mounting means on the flexible member having rings (31) at its ends which are engaged in said slots, each said ring (31) being sealed to the slot in which it is engaged to provide a pressure tight seal for the region between said flexible member (13) and retainer wall.

6. The assembly of claim 1, characterized in that the cage (15) includes a plurality of rods (35) extending axially of the openings joined by a plurality of rings (37, 39).

7. The assembly of claim 1, characterized in that the retainer (11) includes circumferential grooves near its ends and the flexible member (13) includes circumferential projections (33) near its ends engaged in said grooves.

8. The assembly of claim 1, characterized in that the retainer (11) includes a groove (27) in communication with the fluid supply means (29) for distributing the fluid in the region between the flexible member (13) and the retainer (11).

9. The assembly of claim 1, characterized in that the retainer (11) includes slots in its end surfaces and the flexible member (13) includes rings (31) extending from its ends, the rings (31) being engaged and sealed pressure tight in said slots.

**Revendications**

1. Dispositif de préhension (10) pour saisir et retenir de façon ferme et libérable un objet, ce dispositif (10) comprenant un élément de retenue (11) comportant une paroi intérieure et une ouverture qui est délimitées par la paroi intérieure de l'élément de retenue, un élément annulaire flexible (13), des moyens coopérant sur ledit élément annulaire (13) et sur ledit élément de retenue (11) pour le montage de l'élément annulaire flexible (13) le long de la paroi intérieure de l'élément de retenue (11); un ensemble annulaire étanche aux fluides comprenant la région entre l'élément de retenue (11) et l'élément annulaire flexible (13); un moyen (29) connecté à l'élément de retenue (11) pour injecter un fluide sous pression dans ladite région étanche au fluide entre l'élément de retenue (11) et l'élément flexible (13) pour dilater cet élément flexible (13) de manière qu'il vienne en contact avec l'objet (51) et exerce une préhension sur ce dernier sous la pression dudit fluide; et une cage (15) montée à l'intérieur de l'ouverture de l'élément de retenue (11), l'élément flexible (13) étant interposé entre la cage (15) et la paroi intérieure de l'élément de retenue, l'objet (51) étant disposé à l'intérieur de la cage (15) et la cage (15) comportant des fenêtres à travers lesquelles des parties de l'élément flexible (13) font saillie sous l'action du fluide pour porter contre l'objet (51) à des emplacements de préhension prédéterminés, caractérisé en ce que l'élément de retenue (11) comprend une gorge centrale (27) entourant l'élément flexible (13) et raccordé au moyen (29) d'injection de fluide pour transmettre le fluide dans la région comprise entre la paroi intérieure de l'élément de retenue (11) et l'élément flexible (13); et la cage (15) comprend des barres (35) s'étendant dans le sens axial de l'ouverture et trois bagues (37, 39) reliant les barres (35) à leurs extrémités et au centre, les barres (35) et les bagues (37, 39) délimitant deux ensembles de fenêtres à travers lesquelles les parties de l'élément flexible (13) font saillies pour venir porter contre l'objet (51) et pour aligner cet objet.

2. Dispositif de préhension (10) selon la revendication 1, caractérisé en ce que l'épaisseur de l'élément flexible (13) est relativement faible de sorte que cet élément flexible (13) lorsqu'il porte contre un objet (51) ayant un contour de surface irrégulier épouse lui-même la forme de la surface dudit objet (51).

3. Dispositif de préhension (10) selon la revendication 1, caractérisé en ce que l'élément de retenue (11) comprend une gorge (27) entourant l'élément flexible (13) et raccordé au moyen (29) d'injection de fluide pour transmettre le fluide à la région comprise entre la paroi intérieure de l'élément de retenue (11) et l'élément flexible (13).

4. Dispositif de préhension (10) selon la revendication 1, caractérisé en ce que l'élément de retenue (11) est formé par une pluralité de sections (17, 19) d'élément de retenue accolées côte à côte, les surfaces intérieures desdites sections (17, 19) ayant la même étendue de manière à former une paroi intérieure définissant l'ouverture.

5. Dispositif de préhension (10) selon la revendication 1, caractérisé en ce que l'élément de retenue (11) et l'élément flexible (13) ont une forme cylindrique dans leur ensemble, l'élément de retenue (11) comportant des rainures circonférentielle dans ses extrémités et le moyen de montage se trouvant sur l'élément flexible comportant, à ses extrémités, des collerettes (31) qui sont engagées dans lesdites rainures, chaque collerette (31) étant rendue étanche vis-à-vis de la rainure dans laquelle elle est logée afin de former un joint étanche à la pression pour la région comprise entre l'élément flexible (13) et la paroi de l'élément de retenue.

6. Dispositif selon la revendication 1, caractérisé en ce que la cage (15) comprend une pluralité de barres (35) s'étendant dans le sens axial des ouvertures et reliées par une pluralité de bagues (37, 39).

7. Dispositif selon la revendication 1, caractérisé en ce que l'élément de retenue (11) comprend des gorges circonférentielles près de ses extrémités et l'élément flexible (13) comprend près de ses extrémités des saillies circonférentielles (33) engagées dans lesdites gorges.

8. Dispositif selon la revendication 1, caractérisé en ce que l'élément de retenue (11) comprend une gorge (27) communiquant avec le moyen (29) d'alimentation en fluide pour distribuer le fluide dans la région comprise entre l'élément flexible (13) et l'élément de retenue(11).

9. Dispositif selon la revendication 1, caractérisé en ce que l'élément de retenue (11) comprend des rainures dans ses surfaces d'extrémité et l'élément flexible (13) comprend des collerettes (31) s'étendant depuis ses extrémités, les collerettes (31) étant engagées et rendues étanches vis-à-vis de la pression dans lesdites rainures.

**Patentansprüche**

1. Greiferzusammenbau (10) zum festen und lösbaren Ergreifen und Halten eines Gegenstandes (51) innerhalb des Zusammenbaus, wobei der Zusammenbau (10) einen Behälter (11) mit einer Innenwand und einer innerhalb dieser gelegenen Öffnung, die von der Innenwand des Behälters (11) umschlossen ist, ein flexibles ringförmiges Glied (13), am Glied (13) und am Behälter (11) vorgesehene zusammenwirkende Einrichtungen zum Anbringen des flexiblen ringförmigen Gliedes (13) entlang der Innenwand des Behälters (11), eine ringförmige, flüssigkeitsdichte Anordnung, die den Bereich zwischen dem Behälter (11) und dem flexiblen Glied (13) einschließt, mit dem Behälter (11) verbundene Mittel (29) zum Einspritzen einer unter Druck stehenden Flüssigkeit in den flüssigkeitsdichten Bereich zwischen dem Behälter (11) und dem flexiblen Glied (13), um das flexible Glied (13) auszudehnen und unter dem Druck der Flüssigkeit den Gegenstand (51) zu erfassen und zu greifen, und einen innerhalb der Öffnung des Behälters angebrachten Käfig (15), enthält, wobei das flexible Glied (13) zwischen dem Käfig (15) und der Innenwand des Behälters angeordnet ist, der Gegenstand (51) innerhalb des Käfigs (15) angeordnet ist, und der Käfig (15) Fenster aufweist, durch die Teile des flexiblen Gliedes (13) mittels der Flüssigkeit vorgeschoben werden, um den Gegenstand (51) an vorgegebenen Haltepunkten zu erfassen, dadurch gekennzeichnet, daß der Behälter (11) eine zentrale Nut (27) enthält, die das flexible Glied (13) kreisförmig umgibt und mit der Einrichtung (29) zum Einspritzen der Flüssigkeit in Verbindung steht, um die Flüssigkeit in den Bereich zwischen der Innenwand des Behälters (11) und dem flexiblen Glied (13) zu übertragen, und der Käfig (15) axial zur Öffnung verlaufende Stäbe (35) und drei Ringe (37, 39) enthält, die die Stäbe (35) an ihren Enden und in der Mitte verbinden, wobei die Stäbe (35) und die Ringe (37, 39) zwei Reihen von Fenstern bilden, durch die die Teile des flexiblen Gliedes (13) herausgedrückt werden, um den Gegenstand (51) zu ergreifen und auszurichten.

2. Greiferzusammenbau (10) nach Anspruch 1, dadurch gekennzeichnet, daß die Dicke des flexiblen Gliedes (13) relativ gering ist, so daß das flexible Glied (13) beim Erfassen eines Gegenstandes (51) mit unregelmäßig geformter Oberfläche sich selbst an die Oberfläche des Gegenstandes (51) anpaßt.

3. Greiferzusammenbau (10) nach Anspruch 1, wobei der Behälter (11) eine Nut (27) aufweist, die das flexible Glied (13) kreisförmig umgibt und die mit der Einrichtung (29) zum Einspritzen der Flüssigkeit verbunden ist, um die Flüssigkeit in den Bereich zwischen der Innenwand des Behälters (11) und dem flexiblen Glied (13) zu übertragen.

4. Greiferzusammenbau (10) nach Anspruch 1, dadurch gekennzeichnet, daß der Behälter (11) aus mehreren aneinander anliegenden Behälterabschnitten (17, 19) gebildet ist, wobei die Innenflächen der Abschnitte (17, 19) ineinander übergehen und die die Öffnung begrenzende Innenwand bilden.

5. Greiferzusammenbau (10) nach Anspruch 1, dadurch gekennzeichnet, daß der Behälter (11) und das flexible Bauglied (13) allgemein zylindrisch sind, der Behälter (11) an seinen Enden dem Umfang folgende Schlitze aufweist und das Befestigungsmittel an dem flexiblen Glied an dessen Ende Ringe (31) aufweist, die mit den Schlitzen in Eingriff gebracht werden, wobei jeder Ring (31) in dem Schlitz, in dem er eingesetzt ist, dicht befestigt ist, um eine druckdichte Abdichtung für den Bereich zwischen dem flexiblen Glied (13) und der Wand des Behälters zu bilden.

6. Anordnung nach Anspruch 1, dadurch gekennzeichnet, daß der Käfig (15) mehrere axial zur Öffnung verlaufende Stäbe (35) umfaßt, die von mehreren Ringen (37, 39) verbunden werden.

7. Anordnung nach Anspruch 1, dadurch gekennzeichnet, daß der Behälter (11) nahe an seinen Enden dem Umfang folgende Nuten umfaßt und das flexible Glied (13) nahe seinen Enden dem Umfang folgende Vorsprünge (33) umfaßt, die mit den Nuten in Eingriff stehen.

8. Anordnung nach Anspruch 1, dadurch gekennzeichnet, daß der Behälter (11) eine Nut (27) enthält, die in Verbindung mit der Flüssigkeitszuführeinrichtung (29) steht und zum Verteilen der Flüssigkeit in dem Bereich zwischen dem flexiblen Glied (13) und dem Behälter (11) dient.

9. Anordnung nach Anspruch 1, dadurch gekennzeichnet, daß der Behälter (11) in seinen Endflächen Schlitze aufweist und das flexible Glied (13) von seinen Enden vorspringende Ringe (31) aufweist, wobei die Ringe (31) mit den Schlitzen in Eingriff stehen und in diesen druckdicht abgedichtet sind.

FIG.1.

FIG.2.

FIG.3.

FIG.4.

FIG.5.

FIG.11.

FIG.10.

EP 0 218 198 B1

93

VII                    VII

2.12

61

59

FIG. 6.

FIG. 9.

85        75    81

91    71   .12 ±.01

69

65

73

63

4.25

75

61

59

95

67

93

FIG. 7.

IX

85

81

75

.187    1.750
2.125

FIG.8.